# EUROPEAN PATENT SPECIFICATION

(11) **EP 2 854 568 B1**
(45) Date of publication and mention of the grant of the patent: **11.11.2020**
(21) Application number: 13796648.7
(22) Date of filing: 30.04.2013
(51) Int. Cl.: A23L 2/44, A23L 2/68, A23L 2/62

(54) **NATURAL CLOUDING SYSTEM FOR BEVERAGE APPLICATIONS**
SYSTEM ZUR NATÜRLICHEN TRÜBUNG FÜR GETRÄNKEANWENDUNGEN
SYSTÈME DE NÉBULISANT NATUREL POUR DES APPLICATIONS DE BOISSON

(30) Priority: 31.05.2012 US 201213484754
(43) Date of publication of application: 08.04.2015
(73) Proprietor: Pepsico, Inc., Purchase, NY 10577 (US)
(72) Inventor: BERNAL, Jandry, Wappingers Falls, NY 12590 (US); COLLINS, Damien, Newcestown Cork (IE); FANG, Yuan, Cortland Manor, NY 10567 (US); KRULISH, John, Bogota, NJ 07603 (US); SANNITO, Dan, Norwalk, CT 06851 (US)
(74) Representative: Maiwald Patent- und Rechtsanwaltsgesellschaft mbH
(86) International application number: PCT/US2013/038773
(87) International publication number: WO 2013/180876

(56) References cited:
- WO-A1-85/00005
- WO-A1-2004/017761
- WO-A1-2006/133789
- CA-A1- 2 801 270
- GB-A- 1 393 077
- US-A- 3 658 552
- US-A- 3 959 510
- US-A- 3 959 510
- US-A- 4 479 971
- US-A- 4 705 691
- US-A- 4 790 998
- US-A1- 2008 124 437
- US-A1- 2011 027 424
- US-A1- 2011 268 847
- US-B2- 8 153 180

## Description

### FIELD OF THE INVENTION

The invention relates to a natural clouding system for beverage applications. More particularly, the present invention relates to a natural beverage clouding system,, a beverage product comprising the natural clouding system, and a method for making the natural clouding system. The present invention addresses the need to meet market demand for natural ingredients in beverages.

### BACKGROUND OF THE INVENTION

It has long been known to produce beverages of various formulations. Improved and new formulations are desirable to meet changing market demands. In particular, there is perceived market demand for beverages, whose formulations make greater use of natural ingredients, that is, ingredients distilled, extracted, concentrated or similarly obtained from harvested plants and other naturally occurring sources, with limited or no further processing.

Consumers also demand liquids, including beverages, that are flavorful and that match their expectations regarding appearance. For example, consumers typically expect a certain appearance for a soft drink - cola and root beer are expected to be brown, and an orange flavored drink typically requires an orange, opaque beverage. Some beverages, such as water and colas, have relatively low turbidity giving them a transparent or clear appearance. Other beverages such as juices have relatively higher turbidity and thus have an opaque appearance.

Often, it is desired that the beverage have a relatively high turbidity. The turbidity of such beverages can be increased by the use of a clouding system. A need exists for a beverage clouding system that results in a cloudy beverage, the taste of which is not adversely affected by the addition of the clouding system. In addition, it would be desirable for the clouding system to be natural, for instance to allow preparation of cloudy compositions that are natural. Obstacles to achieving a cloudy natural beverage include difficulty in adequately preserving the clouding agent and the cloudy natural beverage containing the clouding agent. Moreover, there is a dearth of natural weighting agents that have regulatory approval, to provide the cloudiness.

It is therefore an object of the present invention to provide natural clouding systems and a beverage product having a natural clouding system, as well as a resulting beverage, and a method related to natural clouding systems. It is an object of at least certain (but not necessarily all) embodiments of the invention to provide beverages and other beverage products having improved formulations, such as only natural ingredients. Beverage clouding agents based on natural gum resins are disclosed in US 3959510. A clouding agent is also disclosed in US 3658552. Further, a low juice concentrate composition for edible calcium fortified products using stabilized emulsified cloud is disclosed in US 2011/0268847 A1.

### BRIEF SUMMARY OF THE INVENTION

In accordance with a first aspect, a natural clouding system is provided, namely the natural clouding system of claim 1, which comprises a natural oil; a natural emulsifier; a natural acid; a natural aqueous component comprising water, fruit juice, vegetable juice, or mixtures of any of them; and a natural preservative, wherein the natural preservative comprises ethanol, glycerin, or combinations thereof and is present in an amount from 5% to 50% by weight of the natural clouding system; and wherein the natural clouding system contains only natural components. Thus, the natural preservative comprises ethanol, glycerin, or combinations thereof.

In accordance with another aspect, a beverage product, namely the beverage product of claim 7, such as a beverage or beverage concentrate or other product, is provided, which comprises at least one beverage component selected from the group consisting of water, carbonated water, fruit juice, vegetable juice, tea, coffee, and milk; and a natural clouding system according to the first aspect. In an embodiment, the beverage product contains only natural components.

In accordance with a further aspect, a method is provided for preparing a natural clouding system, namely the method of claim 9, which comprises forming a mixture by combining a natural oil; a natural emulsifier; a natural acid; a natural aqueous component comprising water, fruit juice, vegetable juice, or mixtures of any of them; and a natural preservative, wherein the natural preservative comprises ethanol, glycerin, or combinations thereof and is present in an amount from 5% to 50% by weight of the natural clouding system;, and homogenizing the mixture to form an emulsion having an average particle size of less than 1 micron (µm). Thus, the natural preservative comprises ethanol, glycerin, or combinations thereof.

### DETAILED DESCRIPTION OF EMBODIMENTS OF THE INVENTION

Various examples and embodiments of the inventive subject matter disclosed here are possible and will be apparent to the person of ordinary skill in the art. In this disclosure reference to "some embodiments," "certain embodiments," "certain exemplary embodiments" and similar phrases each means that those embodiments are merely non-limiting examples of the inventive subject matter and that there are or may be other, alternative embodiments which are not excluded. Unless otherwise indicated or unless otherwise clear from the context in which it is described, alternative elements or features in the embodiments and examples below and in the Summary above are interchangeable with each other. That is, an element described in one example may be interchanged or substituted for one or more corresponding elements described in another example. Similarly, optional or non-essential features disclosed in connection with a particular embodiment or example should be understood to be disclosed for use in any other embodiment of the disclosed subject matter. More generally, the elements of the examples should be understood to be disclosed generally for use with other aspects and examples of the products and methods disclosed herein. A reference to a component or ingredient being operative, i.e., able to perform one or more functions, tasks and/or operations or the like, is intended to mean that it can perform the expressly recited function(s), task(s) and/or operation(s) in at least certain embodiments, and may well be operative to perform also one or more other functions, tasks and/or operations.

Each word and phrase used in the claims is intended to include all its dictionary meanings consistent with its usage in this disclosure and/or with its technical and industry usage in any relevant technology area. Indefinite articles, such as "a," and "an" and the definite article "the" and other such words and phrases are used in the claims in the usual and traditional way in patents, to mean "at least one" or "one or more." The word "comprising" is used in the claims to have its traditional, open-ended meaning, that is, to mean that the product or process defined by the claim may optionally also have additional features, elements, etc. beyond those expressly recited.

As used in this disclosure, unless otherwise specified, the term "added" or "combined" and like terms means that the multiple ingredients or components referred to (e.g., oil, emulsifier, preservative, etc.) are combined in any manner and in any order, with or without stirring or the like, with or without heating, etc. For example, one or more ingredients can be dissolved into one or more other ingredients, or sprayed together, etc. As used here, a solution may be a true solution, a slurry, a suspension, or other form of liquid or flowable material. In certain embodiments, for example, materials may be said to be combined to form a homogenous solution. As used here, the term "homogenous" means commercially adequately homogenous for the intended use, e.g., as a component of a next step in a process, as a stand-alone consumable or as an ingredient in a beverage or other food product, as the case may be.

Natural embodiments of the natural clouding system and natural beverage products disclosed here are natural in that they do not contain anything artificial or synthetic (including any color additives regardless of source) that would not normally be expected to be in the food. As used herein, therefore, a "natural" composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc.

As used here, a food or beverage product "comprises an emulsion" or "comprises an aqueous dispersion of an emulsion" where the product includes one or more such emulsions, typically together with one or more other food ingredients. The food or beverage product comprises such emulsion, as that term is used here, notwithstanding that some or all of the water or other diluent or solvent and/or other component or expendable ingredient(s) that the emulsion may originally have had, are not included in the final food or beverage product. As used here, an aqueous dispersion comprises, consists essentially of, or consists of particles distributed throughout a medium of an aqueous component, e.g., as a suspension, a colloid, an emulsion, a sol, etc. The medium of an aqueous component may be pure liquid water, a mixture of water with at least one water-miscible diluent, such as, for example, juice, tea, milk, etc. In some exemplary embodiments there may be a substantial concentration of water-miscible solvent in the emulsion. In certain exemplary embodiments, at least a majority of the emulsion particles have a diameter, as determined by laser light scattering, in the range of 0.10 microns (µm) to 2.00 microns, e.g., from 0.25 µm to 0.45 µm. As used here, the "diameter" is the largest dimension of the particle, and the particle need not be spherical.

In accordance with the first aspect of the present invention, a natural clouding system is provided. The natural clouding system is useful to provide a desired degree of cloudiness to a composition, such as a beverage product, and comprises a natural oil, a natural emulsifier, a natural acid, a natural aqueous component comprising water, fruit juice, vegetable juice, or mixtures of any of them, and a natural preservative, wherein the natural preservative comprises ethanol, glycerin, or combinations thereof and is present in an amount from 5% to 50% by weight of the natural clouding system. In particular, the natural clouding system contains only natural components and does not comprise any artificial ingredients, as discussed above.

As noted above, there is currently a dearth of commercially available natural weighting agents that have received regulatory approval for use in food or beverage products. Typically, in flavor emulsions, the main contributor to the cloudiness is the weighting agent. It was discovered that natural oils could be employed in an emulsion to provide cloudiness without the need for weighting agents. Suitable natural oils for use in exemplary embodiments of the invention include for example palm oil, coconut oil, sunflower oil, canola oil, soy oil, rice bran oil, rice oil, hemp seed oil, and mixtures of any of them. Moreover, juice pulp, waxes, and milk fat are suitable hydrophobic materials that may be employed in place of some or all of the natural oil. To successfully circumvent the need for a weighting agent, a suitable oil will exhibit a sufficiently high specific gravity, such as greater than 0.90, e.g., between 0.92 and 1.1. The one or more oils can be present in the natural clouding system in a desired amount, typically in an amount from about 1% to about 40% by weight of the total natural clouding system. In certain exemplary embodiments, the one or more oils are present in an amount of 5% by weight and 15% by weight of the total natural clouding system.

In certain exemplary aspects, dammar gum is employed to perform the function of a natural weighting agent to assist in increasing the effective specific gravity of the natural oil. Dammar gum is a natural gum from cultivated trees of *Agathis* spp., *Hopea* spp. and *Shorea* spp. Dammar gum is an insoluble gum, and contains a mixture of terpenoid compounds with polysaccharides. The typical uses of dammar gum are as a clouding agent, stabilizer or varnish. It is not believed that dammar gum has previously been used in combination with a natural oil in a natural clouding system. In certain embodiments, dammar gum is dissolved in oil prior to being added to an aqueous phase of an emulsion. Dammar gum is optionally added into any of the above-disclosed natural oils, including for example palm oil, sunflower oil, soybean oil, as well as natural flavors such as orange terpene. Dammar gum dissolved in an oil and/or a flavor may be referred to as "weighted oil" or "weighted essence".

Natural emulsifiers according to aspects of the invention comprise one or more suitable natural components that assist in suspending the oil in an aqueous solution in an emulsion, for instance a hydrocolloid. Suitable natural emulsifiers for use in exemplary embodiments of the invention include for example gum arabic, pectin, gum ghatti, lecithin, quillaia, protein (e.g., whey protein isolate, casein, soy protein, vegetable protein, etc.), and mixtures of any of them. The one or more emulsifiers can be present in the natural clouding system in a desired amount, typically in an amount from 1% to 40% by weight of the total natural clouding system. In certain exemplary embodiments, the one or more emulsifiers are present in an amount of 2% by weight and 20% by weight of the total natural clouding system.

Importantly, to provide a stable emulsion that remains dispersed in solution during storage, a sufficiently small emulsion particle size in the natural clouding agent must be achieved. It was a surprising discovery of the invention that providing the natural emulsifier and natural oil allows preparation of emulsion particles having an average particle size of less than 1.00 microns, such as less than 0.50 microns or 0.40 microns, when the components of the natural clouding system are homogenized using a two-pass method at a total pressure of 27.6 x 10⁶ Pa (4,000 psi). In certain embodiments, the natural emulsifier and natural oil are present in a ratio of at least 2:1, such as between 2:1 to 6:1, or between 3:1 and 5:1, or 4:1. In certain exemplary embodiments, the ratio of natural emulsifier to natural oil is at least 2:1. When a natural weighting agent such as dammar gum is employed, a ratio of natural weighting agent to natural emulsifier to natural oil is optionally 1-3:1-3:1-3, for instance 2:1:3.

Suitable acids according to aspects of the invention comprise one or more natural edible acids. Acid used in natural clouding systems and beverage products disclosed here can serve any one or more of several functions, including, for example, providing antioxidant activity, lending tartness to the taste of the beverage product, enhancing palatability, increasing thirst quenching effect, decreasing beverage pH, modifying sweetness and acting as a mild preservative by providing microbiological stability. Any suitable natural edible acidulant may be used, for example naturally produced citric acid, malic acid, cinnamic acid, ascorbic acid, glutaric acid, lactic acid, tartaric acid, fumaric acid, gluconic acid, succinic acid, maleic acid, adipic acid, and mixtures of any of them. The acid can be used in solution form, for example, and in an amount sufficient to provide the desired pH of the natural clouding system or beverage. Typically, for example, the one or more acids of the acidulant are used in an amount, collectively, of from 0.05% to 5% by weight of the natural clouding system, e.g., from 0.1% to 3% by weight of the natural clouding system, such as from 0.3% to 2% by weight of the natural clouding system, depending upon the acidulant used, desired pH, other components of the system, etc. According to certain embodiments of the invention, the one or more acids are used in an amount, collectively, of from 0.01% to 1.0% by weight of a beverage, e.g., from 0.05% to 0.5% by weight of a beverage, such as 0.1% to 0.25% by weight of a beverage, depending upon the acidulant used, desired pH, other ingredients used, etc.

Suitable natural preservatives for use in the invention are ethanol and glycerin and mixtures of them. As used here, the term "glycerin" is interchangeable with glycerol and glycerine. The one or more preservatives are present in the natural clouding system in an amount from 5% to 50% by weight of the total natural clouding system. In certain exemplary embodiments, the one or more preservatives are present in an amount of 10% by weight and 40% by weight of the total natural clouding system. When the preservative consists essentially of ethanol, the ethanol is typically present in an amount of at least 10% by weight of the total natural clouding system, such as between about 10% and 20% by weight of the total natural clouding system, or in an amount of at least 20% by weight of the total natural clouding system. When the preservative consists essentially of glycerin, the glycerin is typically present in an amount of at least 20% of the total weight of the natural clouding system, such as at least 30% by weight of the total natural clouding system or 40% by weight of the total natural clouding system, or 50% by weight of the total natural clouding system. When the preservative comprises both ethanol and glycerin, the ethanol is typically present in an amount of 5% to 10% by weight of the total natural clouding system and the glycerin is typically present in an amount of 30% to 40% by weight of the total natural clouding system. It will be within the ability of those skilled in the art, given the benefit of this disclosure, to select suitable amounts of the one or more preservatives for natural clouding systems.

It is an advantage of at least certain embodiments of the invention to provide a natural clouding system that is microbially stable, as determined by passing a micro challenge. As used here, "micro challenge" refers to subjecting a composition to storage at a temperature between 21 and 43 °C (70 and 110 degrees Fahrenheit) for at least sixty days, or at least seventy-five days, or at least ninety days, followed by testing the composition for active microorganisms. The pour-plate technique can be used to determine the number of microbes/mL or microbes/gram in a specimen. Each colony represents a "colony forming unit" (CFU). For optimum accuracy of a count, the preferred range for total CFU/plate is between 30 and 300 colonies per plate. The principle steps in the pour-plate technique employed herein are as follows:
1) prepare and dilute the sample;
2) place an aliquot of the diluted sample into an empty sterile plate;
3) pour in 15 mL of melted agar which has been cooled to 45° C, then swirl the sample to mix well;
4) let the sample cool undisturbed to solidify on a flat table top;
5) invert the solidified sample and incubate to develop colonies.

A micro challenge study on a cold-fill cloud system according to embodiments of the invention pass or fail based on one or more criteria, including rate of microorganism growth, maximum population of microorganism growth, and log reduction of microorganisms from the initial inoculation level. Typically, to pass a micro challenge at least a 2-log reduction will be observed, as determined by the above pour-plate method, over the course of the study, where the initial level of organisms is 1.00 x 10² CFU/mL. All variants are stored at ambient temperature conditions (e.g., 20-25 degrees Celsius) and tested at specified time intervals over the course of a four month period. A passing result would indicate at least a 6 month shelf-life, from a microbiological perspective.

Surprisingly, it was discovered that the inventive natural clouding systems and beverage products comprising natural preservatives, namely ethanol, glycerin, and combinations thereof, are successfully preserved such that they pass at least a sixty day micro challenge, without requiring the employment of artificial preservatives such as benzoates.

Suitable natural aqueous components for use in the present invention are water, fruit juice, vegetable juice, or mixtures of any of them. The water may be carbonated or noncarbonated, depending on the intended finished beverage product. Water is a basic ingredient in the natural clouding system and beverage products disclosed here, typically being the vehicle or primary liquid portion in which the remaining ingredients are dissolved, emulsified, suspended or dispersed. Purified water can be used in the manufacture of certain embodiments of the products disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the clouding system or beverage product. In certain typical embodiments, water is present at a level of from 25% to 85% by weight of a clouding system, such as 30% to 50% by weight of a clouding system, and from 80% to 99.9% by weight of a finished beverage. In at least certain exemplary embodiments the water used in products disclosed here is "treated water," which refers to water that has been treated to reduce the total dissolved solids of the water prior to optional supplementation, e.g., with calcium as disclosed in U.S. patent no. 7,052,725. Methods of producing treated water are known to those of ordinary skill in the art and include deionization, distillation, filtration and reverse osmosis ("r-o"), among others. The terms "treated water," "purified water," "demineralized water," "distilled water," and "r-o water" are understood to be generally synonymous in this discussion, referring to water from which substantially all mineral content has been removed, typically containing no more than 500 ppm total dissolved solids, e.g. 250 ppm total dissolved solids.

Juices suitable for use in the present invention are fruit and vegetable juices. Juices can be employed in the present invention in the form of a single-strength juice, NFC juice, 100% pure juice, clarified juice, juice concentrate, juice puree, or other suitable forms. The term "juice" as used here includes single-strength fruit, or vegetable juice, as well as concentrates, purees, milks, and other forms. Multiple different fruit and/or vegetable juices can be combined, optionally along with other flavorings, to generate a product having the desired flavor.

According to the present invention, water or a fruit juice or vegetable juice or mixtures thereof must be comprised in the natural aqueous component. Examples of suitable juice sources for the fruit juice or vegetable juice are listed in the following together with further juice sources for juices that are optionally comprised in the natural aqueous component in addition to the fruit juice or vegetable juice or mixtures thereof. These examples include orange, lemon, lime, tangerine, mandarin orange, tangelo, pomelo, grapefruit, grape, red grape, sweet potato, tomato, celery, beet, lettuce, spinach, cabbage, watercress, rhubarb, carrot, cucumber, raisin, cranberry, pineapple, peach, banana, apple, pear, guava, apricot, watermelon, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, lychee, plum, prune, date, currant, fig, etc. Numerous additional and alternative juices suitable for use in at least certain exemplary embodiments will be apparent to those skilled in the art given the benefit of this disclosure.

As discussed above, some beverages have relatively low turbidity giving them a transparent or clear appearance, while other beverages such as certain juices have relatively higher turbidity and thus have an opaque appearance. As used here, "cloudy" refers to optical turbidity. In contrast, as used here, "clear" refers to optical clarity, i.e., a clear beverage can be as clear as water. The extent of clarity or cloudiness of a composition is determined quantitatively using a turbidimeter, for example a HACH Turbidimeter (Model 2100AN, Hach Company, Loveland, Colo.). Turbidimeters provide a measurement of turbidity in Nephelometric Turbidity Units (NTU). As used here, a "clear" composition has a turbidity of 1 NTU and not more than 3 NTU. When such a reading is as high as 5 to 10 NTU, a sample is not clear, but rather slightly or very slightly cloudy. Thus, a beverage having turbidity not greater than NTU is said to be a clear beverage.

As used here, a "cloudy" composition has a measured turbidity of 15 NTU or greater. Thus, a beverage having turbidity not less than 15 NTU is said to be a cloudy beverage. In certain aspects of the invention, a food or beverage composition comprising the natural clouding system has a turbidity of 75 NTU or greater, or 100 NTU or greater, or 125 NTU or greater, or in the range of 350 to 10,000 NTU, or in the range of 350 to 4,000 NTU, or in the range of 350 to 1,000 NTU.

As used here, "ringing" refers to a collection of precipitated oil in the shape of a line or a ring, typically located at or near the side or top of a container, for example at the neck of a beverage bottle. Ringing is measured by employing a ruler to determine the length of a line or ring of precipitate floating on or near the surface of the composition. If the line or ring is 1 millimeter (mm) or longer, the precipitate is classified as "ringing." In contrast, if the line or ring is less than 1 mm in length, the precipitate is classified as not constituting "ringing." As will be appreciated by those of skill in the art, ringing is typically an undesirable phenomena for food and beverage products, and can develop when a clouding emulsion becomes unstable. In certain aspects of the invention, a food or beverage composition comprising the natural clouding system has a turbidity of 75 NTU or greater at the time of manufacture and is preferably devoid of ringing. Moreover, the natural clouding system in embodiments of the food or beverage composition is stable, such that the measured turbidity at the time of manufacture changes by less than 10% after 8 days, or after 30 days, or after 60 days, or after six months of storage at a temperature between 21 and 43 °C (70 and 110 degrees Fahrenheit). In alternate embodiments, the natural clouding system in the food or beverage composition is stable such that the measured turbidity at the time of manufacture decreases by less than 15% after 8 days, or after 30 days, or after 60 days, or after six months of storage at a temperature between 21 and 43 °C (70 and 110 degrees Fahrenheit).

In the second aspect of the present invention, a beverage product is provided comprising at least one beverage component selected from the group consisting of water, carbonated water, fruit juice, vegetable juice, tea, coffee and milk, and a natural clouding system according to the first aspect of the present invention. In accordance with yet another embodiment of the present invention, a cloudy beverage comprises a natural clouding system as described previously in accordance with the present invention, at least one beverage component as listed above, and an edible liquid selected from ready-to-drink beverages. The edible liquid is typically an aqueous composition with significantly low turbidity. Non-limiting examples of ready-to-drink beverages include juices, teas, coffees, nonalcoholic drinks, carbonated drinks, noncarbonated drinks, and mixtures of any of them.

The natural clouding agent is present in the beverage product in an amount sufficient to achieve the desired degree of turbidity. A higher concentration of the natural clouding agent present in the beverage product results in a more cloudy beverage product. Conversely, a lower concentration of the clouding agent present in the beverage product results in a less cloudy beverage product. As used herein, the terms cloudy, cloudiness, and variations thereof when used to describe a beverage product mean a beverage product containing a readily visible and/or quantitatively measurable amount of turbidity.

In embodiments of the present invention, the amount of clouding agent present in a beverage product to achieve the desired degree of turbidity is from 30 ppm to 10,000 ppm by weight, such as from 1000 ppm to t 8000 ppm by weight. Those skilled in the art will appreciate that as the concentration of the clouding agent increases, the degree of turbidity increases at a marginally decreasing rate. Thus, increasing the concentration of the clouding agent may result in a higher concentration of the clouding agent in the beverage product without any observable increase in the turbidity of the beverage product. It will be within the ability of those skilled in the art, given the benefit of this disclosure, to select suitable amounts of the natural clouding system for use in various embodiments of the beverage products disclosed here.

At least certain exemplary embodiments of cloudy beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by adding the natural clouding system to a beverage syrup concentrate, then combining 1 part cloudy beverage concentrate with between 1 to 7 parts water. This range is typical for carbonated soft drinks. In certain exemplary embodiments the full strength beverage is prepared by combining 1 part cloudy beverage concentrate with between 7 and 12 parts water. This range is typical for hot filled beverage formulations. In certain exemplary embodiments the additional water used to form the full strength beverages is carbonated water. In certain other embodiments, a full strength beverage comprising the natural clouding system is directly prepared without the formation of a cloudy concentrate and subsequent dilution.

Non-mineral nutritive compounds such as vitamins can be added to the beverage products. Examples of non-mineral nutritional supplement ingredients are known to those of ordinary skill in the art and include, for example, antioxidants and vitamins, including Vitamins A, D, E (tocopherol), C (ascorbic acid), Bi (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between 1% and 100% RDV, where such RDV are established. In certain exemplary embodiments the non-mineral nutritional supplement ingredient(s) are present in an amount of from 5% to 20% RDV, where established.

As used herein, a "full-calorie" beverage formulation is one fully sweetened with a nutritive sweetener. The term "nutritive sweetener" refers generally to sweeteners which provide significant caloric content in typical usage amounts, e.g., more than 5 calories per 22.7 g (8 oz.) serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Acesulfame- K | 200 times as sweet as sugar |
| Mogroside V | 100-300 times as sweet as sugar |
| Rebaudioside A | 150-300 times as sweet as sugar |
| Aspartame | 200 times as sweet as sugar |
| Saccharine | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, a "non-nutritive sweetener" is one which does not provide significant caloric content in typical usage amounts, i.e., is one which imparts less than 5 calories per 227 g (8 oz.) serving of beverage to achieve the sweetness equivalent of 10 Brix of sugar. As used herein, "reduced calorie beverage" means a beverage having at least a 25% reduction in calories per 227 g (8 oz.) serving of beverage as compared to the full calorie version, typically a previously commercialized full-calorie version. As used herein, a "low-calorie beverage" has fewer than 40 calories per 227 g (8 oz.) serving of beverage. As used herein, "zero-calorie" or "diet" means having less than 5 calories per serving, e.g., per 227 g (8 oz.) for beverages.

Sweeteners suitable for use in various embodiments of the natural clouding agent and beverage products disclosed herein include nutritive and non-nutritive, natural and artificial or synthetic sweeteners. Suitable sweeteners and combinations of sweeteners are selected for the desired nutritional characteristics, functional characteristics, taste profile, mouthfeel and other organoleptic factors. Non-nutritive artificial sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame (including but not limited to acesulfame potassium), cyclamate (including but not limited to sodium cyclamate and/or calcium cyclamate), neohesperidin dihydrochalcone, and sucralose. Alitame may be less desirable for caramel-containing beverages where it has been known to form a precipitate. In certain exemplary embodiments the beverage product employs aspartame as the sweetener, either alone or with other sweeteners. In certain other exemplary embodiments the sweetener comprises aspartame and acesulfame potassium. Other non-nutritive sweeteners suitable for at least certain exemplary embodiments include, for example, sorbitol, mannitol, xylitol, glycyrrhizin, neohesperidin dihydrochalcone, D-tagatose, erythritol, meso-erythritol, malitol, maltose, lactose, fructo-oligosaccharides, Lo Han Guo powder, steviol glycosides, e.g., rebaudiosides such as Rebaudioside A, stevioside, etc., xylose, arabinose, isomalt, lactitol, maltitol, trehalulose, and ribose, and protein sweeteners such as monatin, thaumatin, monellin, brazzein, L-alanine and glycine related compounds and mixtures of any of them. Lo Han Guo, steviol glycosides, e.g., rebaudiosides such as Rebaudioside A, stevioside, etc. and related compounds, as discussed further below, are natural non-nutritive potent sweeteners. It will be within the ability of those skilled in the art, given the benefit of this disclosure, to select suitable non-nutritive sweeteners (e.g., one or combination of non-nutritive sweeteners, either alone or together with nutritive sweetener) for a particular embodiment of the beverage products disclosed here.

In at least certain exemplary embodiments of the beverage products disclosed here, the sweetener component can include nutritive, natural crystalline or liquid sweeteners such as sucrose, liquid sucrose, fructose, liquid fructose, glucose, liquid glucose, leucrose, trehalose, galactose, isomaltulose, dextrose, maltodextrin, corn syrup solids, glucooligosaccharides, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup and/or others. Such sweeteners are present in at least certain exemplary embodiments in an amount of from 0.1% to 20% by weight of the beverage, such as from 1% to 4% by weight, depending upon the desired level of sweetness for the beverage product. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of nonsugar solids which could adversely affect the flavor, color or consistency of the beverage product.

The sweeteners are edible consumables suitable for consumption and for use in beverage products. By "edible consumables" is meant a food or beverage or an ingredient of a food or beverage for human or animal consumption. The sweetener or sweetening agent used here and in the claims can be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

Non-nutritive, high potency sweeteners typically are employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

As mentioned above, at least certain exemplary embodiments of the beverage products disclosed here employ a sweetening amount of one or more steviol glycosides, e.g., rebaudiosides such as Rebaudioside A, Rebaudioside B, Rebaudioside C, Rebaudioside D, Rebaudioside E, Rebaudioside F, stevioside, etc. or related compounds or mixtures of any of them for sweetening. These compounds can be obtained by extraction or the like from the stevia plant. Stevia (e.g., Stevia rebaudiana bectoni) is a sweet-tasting plant. The leaves contain a complex mixture of natural sweet diterpene glycosides. Steviol glycosides, e.g., rebaudiosides such as Rebaudioside A, stevioside, etc. are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The following nonsweet constituents also have been identified in the leaves of stevia plants: labdane, diterpene, triterpenes, sterols, flavonoids, volatile oil constituents, pigments, gums and inorganic matter. In at least certain embodiments of the beverage products disclosed herein, non-nutritive sweeteners steviol glycosides, e.g., rebaudiosides such as Rebaudioside A, stevioside, etc. may be included in ready to drink beverage compositions at a weight percent of 0.01% to 10.0%, and preferably between 0.02% and 0.75%.

The sweetener Lo Han Guo, which has various different spellings and pronunciations and is abbreviated here in some instances as LHG, can be obtained from fruit of the plant family Cucurbitaceae, tribe Jollifieae, subtribe Thladianthinae, genus Siraitia. LHG often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Lo Han Guo fruit. LHG contains triterpene glycosides or mogrosides, which constituents may be used as LHG sweeteners. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. Lo Han Guo can be used as the juice or juice concentrate, powder, etc. Preferably LHG juice contains at least 0.1%, e.g., from 0.1% to 15%, mogrosides, preferably mogroside V, mogroside IV, (11-oxo-mogroside V), siamenoside and mixtures thereof. LHG can be produced, for example, as discussed in U.S. patent No. 5,411,755. Sweeteners from other fruits, vegetables or plants also may be used as natural or processed sweeteners or sweetness enhancers in at least certain exemplary embodiments of the beverages disclosed here.

Additional preservatives may be used in at least certain embodiments of the beverage products disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable natural preservatives approved for use in food and beverage compositions, including such known preservatives as nisin, cinnamic acid, e.g., sodium, calcium, and citrates, e.g., sodium citrate and potassium citrate, and antioxidants such as ascorbic acid, and combinations thereof.

Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is 0.05% by weight of the beverage. It will be within the ability of those skilled in the art, given the benefit of this disclosure, to select a suitable preservative or combination of preservatives for beverages according to this disclosure. In certain embodiments of the invention comprising beverage products that comprise at least one artificial ingredient, benzoic acid or its salts (benzoates) or sorbic acid or its salts (sorbates) may be employed as preservatives in the beverage products.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., 88°C (190° F) for 10 seconds, tunnel pasteurization methods typically using lower temperatures for a longer time, e.g., 71°C (160° F) for 10-15 minutes, and retort methods typically using, e.g., 121 °C (250° F) for 3-5 minutes at elevated pressure, i.e., at pressure above 1 atmosphere.

Non-limiting examples of beverage products that may comprise a natural clouding system include non-carbonated and carbonated beverages having citrus flavors such as lemon, lime, lemon/lime, orange, grapefruit, and other flavors; colas, ginger ales, root beers, ciders, other fruit-flavored soft drinks such as strawberry, melon, pomegranate, raspberry, blackberry, grape, and the like, and drinks made by adding water to a powder or concentrate (e.g., cola, juice, tea, flavoring for water, coffee, and ades). Other examples include fruit juices of all types, including beverages and ades containing juice or fruit particles, such as lemonade, vegetable juices, and mixed juices containing fruits and vegetables. Additional examples include sport drinks, energy drinks, water with natural or artificial flavorants, tea and tea-containing beverages, coffee and coffee-containing beverages, and cocoa.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than 3% of the mixture of flavorings and emulsifier. In certain exemplary embodiments the emulsifier is from 5% to 30% of the mixture.

Cola beverages typically exhibit a dark brown color derived from caramel coloring. Caramel is the dark brown material resulting from carefully controlled heat treatment of food grade carbohydrates, and therefore is known as "burnt sugar color." There are four classes of caramel, classified by the inclusion of or processing with additional reactants. Caramel class I is plain caramel with no added reactants, so it is natural. In order to darken the color of caramel, artificial reactants such as caustic sulfite and/or ammonia can be added. Caramel class II is caramel that has been processed with caustic sulfite. Caramel class III is caramel that has been processed with ammonia. Caramel class IV is caramel that has been processed with both caustic sulfite and ammonia, and is currently used in the beverage industry to impart a dark brown color to cola beverages. Of the four classes of caramel, currently only caramel class I can be used as a colorant in natural cola beverages, but for at least certain exemplary embodiments of the natural cola beverages disclosed here, caramel class I by itself impart a color which may be found insufficiently dark brown to meet the desired cola appearance. A natural colorant comprising caramel class I and concentrated apple extract has been found to provide sufficiently dark brown color to impart a satisfactory cola appearance. Thus, colorant suitable for certain embodiments of the cola beverages disclosed here comprises caramel class I and concentrated apple extract. In certain exemplary embodiments, the concentrated apple extract comprises coloring compounds and sugar extracted from apples. Preferably, such concentrated apple extract comprises a dark brown viscous liquid having a minimum color index of 1.2 (420 nm, d = 10 mm, 0.4%), a pH of 4 to 6, and a Brix value of 65 to 72. In at least certain exemplary embodiments, the weight ratio of caramel class I to concentrated apple extract is from 1:3 to 1:5, and preferably is 1:3.8. In at least certain exemplary embodiments, the total concentration of colorant is from 5.0 to 10.0 g/L of the beverage, and preferably is 6.5 g/L of the beverage. It will be within the ability of those skilled in the art, given the benefit of this disclosure, to select suitable additional or alternative colorants for use in various embodiments of the beverage products disclosed here.

Certain exemplary embodiments of the beverage products disclosed here also may contain small amounts of buffering agents to adjust pH. Such agents include, e.g., the potassium, sodium, or calcium salts of citric, malic, tartaric, lactic, ascorbic, cinnamic, glutaric, fumaric, gluconic, succinic, maleic and adipic acids, and mixtures of any of them. The amount included will depend, of course, on the type of buffering agents and on the degree to which the pH is to be adjusted.

The beverage concentrates and beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, and tea solids. In preferred embodiments, the additional ingredients are natural.

In another aspect of the present invention, a method for preparing a natural clouding system is provided, namely the method of claim 9. The method comprises forming a mixture by combining a natural oil, a natural emulsifier, a natural acid, a natural aqueous component comprising water, fruit juice, vegetable juice, or mixtures of any of them, and a natural preservative, wherein the natural preservative comprises ethanol, glycerin, or combinations thereof and is present in an amount from 5% to 50% by weight of the natural clouding system; and homogenizing the mixture to form a fine emulsion having an average particle size of equal to or less than 1 micron (µm), such as between 0.20 µm and 1.00, or between 0.30 µm and 0.80 µm, or 0.45 µm. As stated above, the natural preservative comprises ethanol, glycerin, or combinations thereof. The homogenizing typically comprises two passes at a total pressure of between 7 x 10⁶ Pa and 52 x 10⁶ Pa (1,000 and 7,500 pounds per square inch (psi)), such as 27.6 x 10⁶ Pa (4,000 psi) or 31 x 10⁶ Pa (4,500 psi). In certain aspects of the invention, the mixture is formed by dissolving the natural acid and the natural emulsifier in the natural aqueous component, adding the natural preservative, adding the natural oil, and subjecting the mixture to shear to form a pre-emulsion comprising particles having an average particle size of between 1 µm and 20 µm. The natural oil, natural emulsifier, natural acid, natural aqueous component and natural preservative preferably comprise the components disclosed above with respect to the natural clouding system.

The term "pre-emulsion" as used herein means an emulsion wherein the natural oil clouding agent has an average particle size from 1 micron to 20 microns and the oil phase components are slightly uniformly dispersed. The term "fine emulsion" as used herein means an emulsion wherein the natural oil clouding agent has a mean particle size from 0.20 microns to 1.00 microns and a particle size distribution from 0.03 microns to 5.0 microns, preferably from 0.1 microns to 2.0 microns.

The method for preparing a natural clouding system may comprise providing oil phase components, blending the oil phase components without applying any external heat to the oil components. The method may further include providing aqueous phase components, and dispersing the oil phase components in the aqueous phase components under agitation or high shear mixing to produce a pre-emulsion. The oil phase components can be present in a desired amount, typically in an amount from 3% to 40% by weight of the total beverage clouding system. The method may further comprise homogenizing the pre-emulsion at a pressure from 7 x 10⁶ Pa(1000 psi) to 41 x 10⁶ Pa (6000 psi), preferably from 21 x 10⁶ Pa (3000 psi) to 31 x 10⁶ Pa (4500 psi), to produce a uniformly dispersed fine emulsion.

High shear mixing can be performed by any suitable mixer known to those skilled in the art. Non-limiting examples of suitable mixers include turbine agitators, static mixers, and other high shear mixers known to those skilled in the art. Turbine agitators are commercially available from Scott Turbon® Mixer, Inc., Adelanto, Calif., and others as is known in the art. Static mixers, sometimes known in the art as motionless mixers or in-line mixers, come in various sizes and geometries and are commercially available from Chemineer Inc., Dayton, Ohio, Sulzer Chemtech Ltd., a member of the Sulzer Corp., Winterthur, Switzerland, Charles Ross & Son Co., Hauppauge, N.Y., and others as is known in the art.

### EXAMPLES

### Example 1

A microbial stability study was performed to test the feasibility of employing ethanol as a natural preservative. Three natural clouding systems were prepared, inoculated with aciduric bacteria, mold, or preservative resistant yeast and stored for one week. The formulations of the natural clouding systems are provided below in Table 1, and differed in the amounts of ethanol and water.

**Table 1. Variants for testing ethanol as a natural preservative.**

| **Ingredient** | **Variant 1** | **Variant 2** | **Variant 3** |
|---|---|---|---|
| Citric Acid | 0.3% | 0.3% | 0.3% |
| Coconut Oil | 10% | 10% | 10% |
| Ethanol | 5% | 10% | 20% |
| Quillaia | 5% | 5% | 5% |
| Water | 79.7% | 74.7% | 64.7% |
| pH | 2.79 | 2.84 | 3.20 |
| Specific Gravity | 0.99 | 0.98 | 0.97 |
| Brix | 11.67 | 14.10 | 15.34 |

Across each variant, growth of inoculated culture pools for aciduric bacteria and mold decreased below the initial inoculum level by the end of one week, with no significant organism recovery even after the end of a four month study. In contrast, the preservative resistant yeast culture pool achieved significant growth by the end of one week for Variant 1, which contained 5% ethanol as the natural preservative. Neither Variant 2 (i.e., 10% ethanol) nor Variant 3 (i.e., 20% ethanol) showed significant growth of the preservative resistant yeast culture pool.

Accordingly, at least 10% ethanol was determined to be effective as a natural preservative in a natural clouding system, whereas 20% ethanol may optionally be employed to provide an additional margin of safety.

### Example 2

Various amounts and combinations of natural preservatives were studied as potential components for stable natural clouding systems. The clouding systems were prepared and stored for 9 months. Each of the formulas contained 15% Gum Arabic by weight and 1.3% citric acid by weight. Minus the specific preservative, the remainder of the formula consisted of treated water, thus the formulas contained between 78.7 % by weight water (Variant 7) and 38.7 % by weight water (Variant 6). Next, a plate count was performed for all variants that did not show visible mold or yeast growth. Last, a full micro challenge was performed for all variants that passed the initial plate count, employing the pour-plate method described above. The specific natural preservatives and the results of the microbial tests are provided below in Table 2.

**Table 2. Microbial tests for natural preservatives.**

| **Variant** | **Glycerin** | **Ethanol** | **Sucrose** | **Propylene Glycol** | **Plate Count** | **Micro Challenge** |
|---|---|---|---|---|---|---|
| Control | - | - | - | 20% | Pass | Pass |
| 1 | 20% | - | - | - | Fail | - |
| 2 | 20% | 5% | - | - | Fail | - |
| 3 | 30% | - | - | - | Fail | - |
| 4 | 30% | 5% | - | - | Pass | Pass |
| 5 | 40% | - | - | - | Pass | Pass |
| 6 | 40% | 5% | - | - | Pass | - |
| 7 | - | 5% | - | - | Pass | Fail |
| 8 | - | 10% | - | - | Pass | Pass |
| 9 | - | - | 40% | - | Fail | - |

As shown in Table 2 above, a natural clouding system comprising 30% by weight glycerin and 5% by weight ethanol passed the micro challenge, as did a natural clouding system comprising 40% by weight glycerin with or without 5% by weight ethanol, and a natural clouding system comprising 10% by weight ethanol. It is apparent from the above tests that each of glycerin and/or ethanol are suitable natural preservatives for embodiments of natural clouding systems; however, there are minimum amounts of glycerin, ethanol, and combinations of the two required to pass the micro challenge.

### Example 3

Various combinations of natural preservatives, natural oils and natural emulsifiers were studied as potential components for stable natural clouding systems. In particular, emulsion stability tests were performed on natural clouding systems comprising the combinations of emulsifier / preservative / oil. When the preservative was glycerin, it was present in an amount of 40% by weight of the total clouding system. When the preservative was ethanol, it was present in an amount of 10% by weight of the total clouding system.

The natural clouding systems were prepared by combining all of the ingredients, followed by dispersion in beverage syrups, then were diluted and hot filled into either 2 liter (L) bottles or 10 ounce (oz.) bottles. The natural clouding system was processed by either a microfluidizer or an APV Gaulin homogenizer (APV Fluid Handling and Homogenizers, Delavan, WI), using two passes at a pressure of 31 x 10⁶ Pa (4,500 psi). As indicated above, prior to producing a beverage, a syrup was made. The beverage syrup consisted of 54 wt. % sucrose, 44.73 wt. % water, 0.66 wt. % citric acid, 0.06 wt. % sodium benzoate and 0.55 wt. % natural clouding system. To produce cloudy beverages for bottling, one part of the beverage syrup was combined with four parts carbonated water.

The stability of the natural clouding system emulsions in the beverages was evaluated after storage for ten days at a temperature of 21°C (70 degrees Fahrenheit). The specific variants and the results of the emulsion stability tests are provided below in Table 3. Stability criteria was determined by measuring the size of any ringing precipitate on top of the beverage, where a beverage comprising a "borderline" stability has a slight ringing of 1 mm length or less, a beverage comprising a "good" stability has no visible ringing, and a beverage comprising a "poor" stability has a ringing of 1 mm length or more.

**Table 3. Emulsion stability tests for natural clouding systems.**

| **Emulsifier / Preservative / Oil** | **Stability** | **Particle Size (µm)** | **Turbidity (NTU)** |
|---|---|---|---|
| Gum Arabic / Glycerin / Palm Oil | Borderline | 0.63 | 131 |
| Gum Arabic/Glycerin / Palm Oil | Good | 0.31 | 120 |
| Gum Arabic / Glycerin / Rice Bran Oil | Good | 0.33 | 123 |
| Gum Arabic / Glycerin / Canola Oil | Poor | 0.57 | 156 |
| Gum Arabic / Glycerin / Coconut Oil | Poor | 0.66 | 94.2 |
| Quillaia / Ethanol / Palm Oil | Good | 0.38 | 134 |
| Quillaia / Ethanol / Canola Oil | Borderline | 0.34 | 164 |
| Quillaia / Ethanol / Coconut Oil | Good | 0.38 | 122 |

As can be seen in the above table, the quillaia / ethanol clouding systems provided greater stability in beverage compositions than the gum arabic / glycerin clouding systems, as evidenced by greater stability. This is likely due to the smaller average particle sizes.

### Example 4

A 379 1 (100 gallon) natural cloud system was prepared to test capability for scaling up a natural cloud system from benchtop scale to commercial scale. The formulation for the natural cloud system of the example is provided below in Table 4. The natural cloud system was prepared by the following method:
1. Added the water to a temperature controlled tank.
2. Dissolved the citric acid in water having a temperature of 48°C (118 degrees Fahrenheit), and mixed for 5 minutes, at which time the temperature was 45°C (113 degrees Fahrenheit).
3. Dissolved the gum arabic in the acidified water and mixed for one hour to allow hydration of the gum.
4. Added the glycerin, at a temperature of 22°C (71 degrees Fahrenheit), to the tank and the temperature in the tank decreased to 40°C (104 degrees Fahrenheit). After 15 minutes of mixing the temperature in the tank was 51°C (123 degrees Fahrenheit).
5. Added the palm oil, which had been preheated to 46°C (115 degrees Fahrenheit), and mixed for fifteen minutes.
6. Transferred the contents of the tank to a pre-homogenization tank. The mixture was agitated at high shear for fifty minutes, during which the temperature increased to 50°C (122 degrees Fahrenheit).
7. Homogenized the pre-emulsion at a total pressure of 27.6 x10⁶ Pa (4,000 psi).
8. Cooled the emulsion to 22°C (71 degrees Fahrenheit).
9. Homogenized the emulsion a total of two passes to achieve the final particle size.

**Table 4. 379 1 (100 gallon) natural clouding agent formulation of Example 4.**

| **Ingredient** | **Amount** | **Weight** |
|---|---|---|
| Citric Acid Anhydrous | 2% | 8.75 kg (19.29 lbs.) |
| Gum Arabic (Spray Dried Solids) | 15% | 65.60 kg (144.65 lbs.) |
| Glycerin | 40% | 174.96 kg (385.72 lbs.) |
| Palm Oil | 10% | 43.74 kg (96.43lbs.) |
| Treated Water | 33% | 144.34 kg (318.22lbs.) |
| Total: | 100% | 437.40 kg (964.31 gallons) |

The resulting natural cloud system had 0 CFU/mL colonies of yeast, mold or aciduric bacteria. Moreover, the average particle size of the emulsion on the first day after manufacture was 0.38 µm, with 95% of the emulsion particles having a particle size of 0.67 µm or less. The pH of the natural cloud system was 3.05, and its specific gravity was 1.16 g/mL.

### Example 5

A 379 1 (100 gallon) natural cloud system was prepared to test capability for scaling up a natural cloud system from benchtop scale to commercial scale. The formulation for the natural cloud system of the example is provided below in Table 5. The natural cloud system was prepared by the same method as Example 4, except that three homogenization passes were required, with a total pressure of 38 x 10⁶ Pa (5,500 psi).

**Table 5. 379 1 (100 gallon) natural clouding agent formulation of Example 5.**

| **Ingredient** | **Amount** | **Weight** |
|---|---|---|
| Citric Acid Anhydrous | 2% | 8.75 kg (19.29 lb) |
| Gum Arabic (Spray Dried Solids) | 15% | 65.60 kg (144.65 lb) |
| Glycerin | 40% | 174.96 kg (385.72 lb) |
| Palm Oil | 10% | 43.74 kg (96.43 lb) |
| Treated Water | 33% | 144.34 kg (318.22 lb) |
| Total: | 100% | 437.40 kg (964.31 lb) |

The particular formulation was only able to be prepared as a natural clouding agent having an average particle size of 0.40 microns or less upon homogenizing for a total of three passes and for a total pressure of 38 x 10⁶ Pa (5,500 psi).

### Comparative Example 6

A natural cloud system was prepared and the formulation for the natural cloud system of the comparative example is provided below in Table 6. The natural cloud system was prepared by the method disclosed in Example 4 above.

**Table 6. Natural clouding agent formulation of Comparative Example 6.**

| **Ingredient** | **Amount** |
|---|---|
| Citric Acid Anhydrous | 2% |
| Gum Arabic (Spray Dried Solids) | 15% |
| Sucrose | 40% |
| Coconut Oil | 10% |
| Treated Water | 33% |
| Total: | 100% |

The resulting natural cloud system was stored at ambient temperature for sixty days and a plate count was performed. The natural cloud system having the formulation of Table 6, containing Gum Arabic as an emulsifier and coconut oil as a natural oil, in a ratio of 1.5:1 emulsifier:oil, did not pass the plate count test and thus was not subjected to the micro challenge, although the natural cloud system did provide acceptable particle size.

### Comparative Example 7

A natural cloud system was prepared and the formulation for the natural cloud system of the comparative example is provided below in Table 7. The natural cloud system was prepared by the method disclosed in Example 4 above

**Table 7. Natural clouding agent formulation of Comparative Example 7.**

| **Ingredient** | **Amount** |
|---|---|
| Citric Acid Anhydrous | 2% |
| Gum Arabic (Spray Dried Solids) | 15% |
| Glycerin | 30% |
| Palm Oil | 10% |
| Treated Water | 43% |
| Total: | 100% |

The resulting natural cloud system was stored at ambient temperature for sixty days and a plate count was performed. The natural cloud system having the formulation of Table 7, containing Gum Arabic as an emulsifier and palm oil as a natural oil, in a ratio of 1.5:1 emulsifier:oil, did not pass the plate count test and thus was not subjected to the micro challenge, although the natural cloud system did provide acceptable particle size.

### Example 8

A 379 1 (100 gallon) natural cloud system was prepared and the formulation for the natural cloud system of the example is provided below in Table 8. The natural cloud system was prepared by the method disclosed in Example 4 above.

**Table 8. 379 1 (100 gallon) natural clouding agent formulation of Example 8.**

| **Ingredient** | **Amount** | **Weight** |
|---|---|---|
| Citric Acid Anhydrous | 2% | 8.75 kg (19.29 lb) |
| Gum Arabic (Spray Dried Solids) | 15% | 65.60 kg (144.65 lb) |
| Glycerin | 40% | 174.96 kg (385.72 lb) |
| Coconut Oil (9%), Orange Terpenes (1%) | 10% | 43.74 kg (96.43 lb) |
| Treated Water | 33% | 144.34 kg (318.22 lb) |
| Total: | 100% | 437.40 kg (964.31 lb) |

The resulting natural cloud system was stored at ambient temperature for sixty days and a plate count was performed. The natural cloud system having the formulation of Table 8, containing Gum Arabic as an emulsifier and a 9:1 mix of coconut oil and orange terpenes as the natural oil, in a ratio of 1.5:1 emulsifier:oil, passed the plate count test and also provided acceptable particle size.

### Example 9

A 379 1 (100 gallon) natural cloud system was prepared to test the ability of the natural cloud system to pass a micro challenge containing the preservative of glycerin in an amount of 40 weight percent. The formulation for the natural cloud system of the example is provided below in Table 9. The natural cloud system was prepared by the method disclosed in Example 4 above.

**Table 9. 379 1 (100 gallon) natural clouding agent formulation of Example 9.**

| **Ingredient** | **Amount** | **Weight** |
|---|---|---|
| Citric Acid Anhydrous | 2% | 8.75 kg (19.29 lb) |
| Gum Arabic (Spray Dried Solids) | 15% | 65.60 kg(144.65 lb) |
| Glycerin | 40% | 174.96 kg (385.72 lb) |
| Palm Oil | 10% | 43.74 kg (96.43 lb) |
| Treated Water | 33% | 144.34 kg (318.22 lb) |
| Total: | 100% | 437.40 kg (964.31 lb) |

The resulting natural cloud system was stored at ambient temperature for sixty days and tested using the pour-plate method disclosed above. The natural cloud system exhibited a 2 log reduction from initial inoculation levels against aciduric bacteria, fermenting yeast and garden variety mold with no significant recovery throughout the duration of the micro challenge study. The natural cloud system having the formulation of Table 9, containing Gum Arabic as an emulsifier and palm oil as a natural oil, in a ratio of 1.5:1 emulsifier:oil, also had acceptable particle size.

### Example 10

A microbiological risk assessment was performed on a modified version of the natural cloud system described in Example 9 above. The difference between the original and modified natural cloud system was the oil to gum ratio. The modified cloud contained the preservative of glycerin in an amount of 40 weight percent. Based upon the review of the individual components, pH and water activity, it was concluded that the microstability of the modified cloud would not be expected to change as compared to the original natural cloud system. The formulation for the natural cloud system of the example is provided below in Table 10. The natural cloud system was prepared by the method disclosed in Example 4 above.

**Table 10. 379 1 (100 gallon) natural clouding agent formulation of Example 10.**

| **Ingredient** | **Amount** | **Weight** |
|---|---|---|
| Citric Acid Anhydrous | 2% | 8.75 kg (19.29 lb) |
| Gum Arabic (Spray Dried Solids) | 16% | 65.60 kg (144.65 lb) |
| Glycerin | 40% | 174.96 kg (385.72 lb) |
| Palm Oil | 8% | 43.74 kg (96.43 lb) |
| Treated Water | 34% | 144.34 kg (318.22 lb) |
| Total: | 100% | 437.40 kg (964.31 lb) |

The resulting natural cloud system was stored at ambient temperature for sixty days and tested using the pour-plate method disclosed above. The natural cloud system exhibited 0 CFU/mL colonies of yeast, mold or aciduric bacteria and therefore passed the micro challenge. The natural cloud system having the formulation of Table 10, containing Gum Arabic as an emulsifier and palm oil as a natural oil, in a ratio of 2:1 emulsifier:oil, also had acceptable particle size.

### Example 11

A 379 1 (100 gallon) natural cloud system was prepared to test the ability of the natural cloud system to pass a micro challenge containing the preservative of glycerin in an amount of 40 weight percent. The formulation for the natural cloud system of the example is provided below in Table 11. The natural cloud system was prepared by the method disclosed in Example 4 above.

**Table 11. 379 1 (100 gallon) natural clouding agent formulation of Example 11.**

| **Ingredient** | **Amount** | **Weight** |
|---|---|---|
| Citric Acid Anhydrous | 2% | 8.75 kg (19.29 lb) |
| Gum Arabic (Spray Dried Solids) | 15% | 65.60 kg (144.65 lb) |
| Glycerin | 40% | 174.96 kg (385.72 lb) |
| Palm Oil | 6% | 43.74 kg (96.43 lb) |
| Treated Water | 37% | 144.34 kg (318.22 lb) |
| Total: | 100% | 437.40 kg (964.31 lb) |

The resulting natural cloud system was stored at ambient temperature for sixty days and tested using the pour-plate method disclosed above. The natural cloud system exhibited 0 CFU/mL colonies of yeast, mold or aciduric bacteria and therefore passed the micro challenge. The natural cloud system having the formulation of Table 11, containing Gum Arabic as an emulsifier and palm oil as a natural oil, in a ratio of 2.5:1 emulsifier:oil, also had acceptable particle size.

### Example 12

A natural cloud system was prepared to test the ability of the natural cloud system to pass a micro challenge containing the preservative of glycerin in an amount of 40 weight percent and to test the cloud of a system containing pectin and dammar gum. The formulation for the natural cloud system of the example is provided below in Table 12. The natural cloud system was prepared by the method disclosed in Example 4 above.

**Table 12. Natural clouding agent formulation of Example 12.**

| **Ingredient** | **Amount** |
|---|---|
| Citric Acid Anhydrous | 0.15% |
| Pectin | 2% |
| Glycerin | 40% |
| Canola Oil | 6% |
| Dammar Gum | 4% |
| Treated Water | 47.85% |
| Total: | 100% |

The resulting natural cloud system was stored at ambient temperature for sixty days and tested using the pour-plate method disclosed above. The natural cloud system exhibited 0 CFU/mL colonies of yeast, mold or aciduric bacteria and therefore passed the micro challenge. The natural cloud system having the formulation of Table 12, containing dammar gum as a weighting agent, pectin as an emulsifier and canola oil as a natural oil, in a ratio of 2:1:3 weighting agent:emulsifier:oil, also had acceptable particle size and cloud stability.

Given the benefit of the above disclosure and description of exemplary embodiments, it will be apparent to those skilled in the art that numerous alternate and different embodiments are possible in keeping with the general principles of the invention disclosed here. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A natural clouding system comprising a natural oil; a natural emulsifier; a natural acid; a natural aqueous component; and a natural preservative, wherein the natural preservative comprises ethanol, glycerin, or combinations thereof and is present in an amount from 5% to 50% by weight of the natural clouding system, wherein the natural aqueous component comprises water, fruit juice, vegetable juice, or mixtures of any of them, and wherein the natural clouding system contains only natural components.

2. The natural clouding system of claim 1, wherein the natural oil is selected from the group consisting of palm oil, coconut oil, canola oil, sunflower oil, soy soil, and mixtures of any of them or wherein the natural emulsifier is selected from the group consisting of gum arabic, pectin, quillaia, a protein, and mixtures of any of them, preferably wherein the protein comprises whey protein isolate.

3. The natural clouding system of claim 1 or 2 wherein the natural acid is selected from the group consisting of malic acid, ascorbic acid, cinnamic acid, glutaric acid, fumaric acid, gluconic acid, succinic acid, maleic acid, citric acid, adipic acid, and mixtures of any of them.

4. The natural clouding system according to any of the preceding claims
wherein the ethanol is present in an amount of at least 10 percent by weight, preferably wherein the ethanol is present in an amount of at least 20 percent by weight.

5. The natural clouding system of any of the preceding claims having one of the following:
• further comprising dammar gum as a weighting agent,
• wherein the glycerin is present in an amount of at least 30 percent by weight,
• wherein the natural oil is present in an amount of between 5 percent by weight and 15 percent by weight,
• wherein the ratio of the natural emulsifier to the natural oil is between 3:1 and 6:1, wherein the ratio of the natural emulsifier to the natural oil is at least 4:1.

6. The natural clouding system of any of the preceding claims having one of the following:
• wherein the natural clouding system passes a micro challenge comprising storage at a temperature between 21 and 43 °C (between 70 and 110 degrees Fahrenheit) for at least sixty days, wherein passing the micro challenge is an at least 2-log reduction in the level of organisms when the initial level of organisms is 1.00 x 102 CFU/mL, as determined by a pour-plate method,
• wherein the system comprises a turbidity at the time of manufacture of at least 15 Nephelometric Turbidity Units (NTU),
• wherein the system comprises a turbidity at the time of manufacture of at least 350 NTU,
• wherein after the system is stored at a temperature between 21 and 43 °C (between 70 and 110 degrees Fahrenheit) for at least sixty days, the natural clouding system comprises a measured turbidity that is within 5% of the turbidity measured at the time of manufacture.

7. A beverage product comprising:
at least one beverage component selected from the group consisting of water, carbonated water, fruit juice, vegetable juice, tea, coffee, and milk; and
a natural clouding system according to any of the preceding claims, preferably wherein the beverage product contains only natural components.

8. The beverage product according to claim 7 having one of the following:
• wherein the natural clouding system is present in an amount between 1,000 parts per million and 8,000 parts per million of the beverage product,
• wherein the beverage product comprises a turbidity at the time of manufacture of at least 15 Nephelometric Turbidity Units (NTU),
• wherein the beverage product comprises a precipitate of no more than one millimeter long after the system is stored at a temperature between 21 and 43 °C (between 70 and 110 degrees Fahrenheit) for at least sixty days.

9. A method for making a natural clouding system according to any of the preceding claims 1- 6 comprising: forming a mixture by combining a natural oil; a natural emulsifier; a natural acid; a natural aqueous component comprising water, fruit juice, vegetable juice, or mixtures of any of them; and a natural preservative, wherein the natural preservative comprises ethanol, glycerin, or combinations thereof and is present in an amount from 5% to 50% by weight of the natural clouding system; and homogenizing the mixture to form an emulsion having an average particle size of less than 1 micron (µm).

10. The method of claim 9 wherein the homogenizing comprises two passes and a pressure of 27.6 x 10⁶ Pascal (4,000 pounds per square inch (psi)), preferably wherein the mixture is formed by dissolving the natural acid and the natural emulsifier in the natural aqueous component; adding the natural preservative; adding the natural oil; subjecting the mixture to shear to form an emulsion comprising particles having an average particle size of between 5 microns and 20 microns.

11. The method of claims 9 or 10 having one of the following:
• wherein the natural oil is selected from the group consisting of palm oil, coconut oil, canola oil, sunflower oil, soy soil, and mixtures of any of them,
• wherein the natural emulsifier is selected from the group consisting of gum arabic, pectin, quillaia, a protein, and mixtures of any of them,
• wherein the natural acid is selected from the group consisting of malic acid, ascorbic acid, cinnamic acid, glutaric acid, fumaric acid, gluconic acid, succinic acid, maleic acid, citric acid, adipic acid, and mixtures of any of them,
• wherein the natural aqueous component comprises water, fruit juice, vegetable juice, or mixtures of any of them,
• wherein the ethanol is present in an amount of at least 10 percent by weight,
• adding dammar gum to the natural oil as a weighting agent,
• wherein the natural oil is present in an amount of between 5 percent by weight and 15 percent by weight,
• wherein the ratio of the natural emulsifier to the natural oil is at least 4:1,
• wherein the natural clouding system passes a micro challenge comprising storage at a temperature between 21 and 43 °C (between 70 and 110 degrees Fahrenheit) for at least sixty days, wherein passing the micro challenge is an at least 2-log reduction in the level of organisms when the initial level of organisms is 1.00 x 102 CFU/mL, as determined by a pour-plate method.

12. The method of any of the claims 9-11 wherein the ethanol is present in an amount of at least 10 percent by weight;
wherein the natural oil is present in an amount of between about 5 percent by weight and about 15 percent by weight;
wherein the ratio of the natural emulsifier to the natural oil is at least 4:1; or
wherein the natural clouding system passes a micro challenge comprising storage at a temperature between 21 and 43 °C (between 70 and 110 degrees Fahrenheit) for at least sixty days, wherein passing the micro challenge is an at least 2-log reduction in the level of organisms when the initial level of organisms is 1.00 x 102 CFU/mL, as determined by a pour-plate method.

13. The natural clouding system of claim 1, wherein the natural clouding system consists essentially of a natural oil selected from the group consisting of palm oil, coconut oil, canola oil, sunflower oil, soy soil, and mixtures of any of them; a natural emulsifier selected from the group consisting of gum arabic, pectin, quillaia, a protein, and mixtures of any of them; a natural acid; water; and a natural preservative comprising ethanol, glycerin, or combinations thereof.

## Patentansprüche

1. Natürliches Trübungssystem umfassend ein natürliches Öl; einen natürlichen Emulgator; eine natürliche Säure; eine natürliche wässrige Komponente; und ein natürliches Konservierungsmittel, wobei das natürliche Konservierungsmittel Ethanol, Glycerin oder Kombinationen davon umfasst und in einer Menge von 5 Gew.-% bis 50 Gew.-% des natürlichen Trübungssystems vorhanden ist, wobei die natürliche wässrige Komponente Wasser, Fruchtsaft, Gemüsesaft oder Mischungen von irgendwelchen von diesen umfasst, und wobei das natürliche Trübungssystem nur natürliche Komponenten enthält.

2. Natürliches Trübungssystem nach Anspruch 1, wobei das natürliche Öl ausgewählt ist aus der Gruppe bestehend aus Palmöl, Kokosnussöl, Canolaöl, Sonnenblumenöl, Sojaöl und Mischungen von irgendwelchen von diesen oder wobei der natürliche Emulgator ausgewählt ist aus der Gruppe bestehend aus Gummiarabikum, Pektin, Quillaja, einem Protein und Mischungen von irgendwelchen von diesen, wobei das Protein vorzugsweise Molkenproteinisolat umfasst.

3. Natürliches Trübungssystem nach Anspruch 1 oder 2, wobei die natürliche Säure ausgewählt ist aus der Gruppe bestehend aus Apfelsäure, Ascorbinsäure, Zimtsäure, Glutarsäure, Fumarsäure, Gluconsäure, Bernsteinsäure, Maleinsäure, Zitronensäure, Adipinsäure und Mischungen von irgendwelchen von diesen.

4. Natürliches Trübungssystem nach einem der vorhergehenden Ansprüche, wobei das Ethanol in einer Menge von mindestens 10 Gewichtsprozent vorhanden ist, wobei vorzugsweise das Ethanol in einer Menge von mindestens 20 Gewichtsprozent vorhanden ist.

5. Natürliches Trübungssystem nach einem der vorhergehenden Ansprüche mit einer der folgenden Eigenschaften:
• ferner umfassend Dammar-Gummi als Beschwerungsmittel,
• wobei das Glycerin in einer Menge von mindestens 30 Gewichtsprozent vorhanden ist,
• wobei das natürliche Öl in einer Menge zwischen 5 Gewichtsprozent und 15 Gewichtsprozent vorhanden ist,
• wobei das Verhältnis des natürlichen Emulgators zu dem natürlichen Öl zwischen 3:1 und 6:1 liegt,
wobei das Verhältnis des natürlichen Emulgators zu dem natürlichen Öl mindestens 4:1 beträgt.

6. Natürliches Trübungssystem nach einem der vorhergehenden Ansprüche mit einer der folgenden Eigenschaften:
• wobei das natürliche Trübungssystem einen Mikro-Belastungstest besteht, der eine Lagerung bei einer Temperatur zwischen 21 und 43°C (zwischen 70 und 110 Grad Fahrenheit) für mindestens sechzig Tage umfasst, wobei das Bestehen des Mikro-Belastungstest eine Verringerung des Organismenniveaus um mindestens 2 log ist, wenn das Anfangsniveau der Organismen 1,00 x 102 KBE/mL beträgt, wie durch ein Plattengussverfahren bestimmt,
• wobei das System zum Zeitpunkt der Herstellung eine Trübung von mindestens 15 nephelometrischen Trübungseinheiten (NTU) aufweist,
• wobei das System zum Zeitpunkt der Herstellung eine Trübung von mindestens 350 NTU aufweist,
• wobei, nachdem das System mindestens sechzig Tage lang bei einer Temperatur zwischen 21 und 43°C (zwischen 70 und 110 Grad Fahrenheit) gelagert wird, das natürliche Trübungssystem eine gemessene Trübung aufweist, die innerhalb von 5% der zum Zeitpunkt der Herstellung gemessenen Trübung liegt.

7. Getränkeprodukt umfassend:
mindestens eine Getränkekomponente, ausgewählt aus der Gruppe bestehend aus Wasser, kohlensäurehaltigem Wasser, Fruchtsaft, Gemüsesaft, Tee, Kaffee und Milch;
und ein natürliches Trübungssystem nach einem der vorhergehenden Ansprüche, wobei das Getränkeprodukt vorzugsweise nur natürliche Bestandteile enthält.

8. Das Getränkeprodukt nach Anspruch 7 mit einer der folgenden Eigenschaften:
• wobei das natürliche Trübungssystem in einer Menge zwischen 1000 Anteilen pro Million und 8000 Anteilen pro Million des Getränkeprodukts vorhanden ist,
• wobei das Getränkeprodukt zum Zeitpunkt der Herstellung eine Trübung von mindestens 15 nephelometrischen Trübungseinheiten (NTU) aufweist,
• wobei das Getränkeprodukt ein Präzipitat von nicht mehr als einem Millimeter Länge umfasst, nachdem das System mindestens sechzig Tage lang bei einer Temperatur zwischen 21 und 43°C (zwischen 70 und 110 Grad Fahrenheit) gelagert wird.

9. Verfahren zur Herstellung eines natürlichen Trübungssystems nach einem der vorhergehenden Ansprüche 1 bis 6 umfassend: Bilden einer Mischung durch Kombinieren eines natürlichen Öls; eines natürlichen Emulgators; einer natürlichen Säure; einer natürlichen wässrigen Komponente umfassend Wasser, Fruchtsaft, Gemüsesaft oder Mischungen von irgendwelchen von diesen; und eines natürlichen Konservierungsmittels, wobei das natürliche Konservierungsmittel Ethanol, Glycerin oder Kombinationen davon umfasst und in einer Menge von 5 bis 50 Gew.-% des natürlichen Trübungssystems vorhanden ist; und Homogenisieren der Mischung, um eine Emulsion mit einer durchschnittlichen Teilchengröße von weniger als 1 Mikrometer (µm) zu bilden.

10. Verfahren nach Anspruch 9, wobei das Homogenisieren zwei Durchgänge und einen Druck von 27,6 x 10⁶ Pascal (4000 Pfund pro Quadratzoll (psi)) umfasst, wobei die Mischung vorzugsweise gebildet wird durch Lösen der natürlichen Säure und des natürlichen Emulgators in der natürlichen wässrigen Komponente; Zugabe des natürlichen Konservierungsmittels; Zugabe des natürlichen Öls; Unterziehen der Mischung einer Scherung, um eine Emulsion zu bilden, die Teilchen mit einer durchschnittlichen Teilchengröße zwischen 5 Mikrometer und 20 Mikrometer umfasst.

11. Verfahren nach den Ansprüchen 9 oder 10 mit einer der folgenden Eigenschaften:
• wobei das natürliche Öl ausgewählt ist aus der Gruppe bestehend aus Palmöl, Kokosnussöl, Canolaöl, Sonnenblumenöl, Sojaöl und Mischungen von irgendwelchen von diesen,
• wobei der natürliche Emulgator ausgewählt ist aus der Gruppe bestehend aus Gummiarabikum, Pektin, Quillaja, einem Protein und Mischungen von irgendwelchen von diesen,
• wobei die natürliche Säure aus der Gruppe ausgewählt ist bestehend aus Äpfelsäure, Ascorbinsäure, Zimtsäure, Glutarsäure, Fumarsäure, Gluconsäure, Bernsteinsäure, Maleinsäure, Zitronensäure, Adipinsäure und Mischungen von irgendwelchen von diesen,
• wobei die natürliche wässrige Komponente Wasser, Fruchtsaft, Gemüsesaft oder Mischungen davon umfasst,
• wobei das Ethanol in einer Menge von mindestens 10 Gewichtsprozent vorhanden ist,
• Zugabe von Dammargummi zum natürlichen Öl als Beschwerungsmittel,
• wobei das natürliche Öl in einer Menge zwischen 5 Gewichtsprozent und 15 Gewichtsprozent vorhanden ist,
• wobei das Verhältnis des natürlichen Emulgators zu dem natürlichen Öl mindestens 4:1 beträgt,
• wobei das natürliche Trübungssystem einen Mikro-Belastungstest besteht, der eine Lagerung bei einer Temperatur zwischen 21 und 43°C (zwischen 70 und 110 Grad Fahrenheit) für mindestens sechzig Tage umfasst, wobei das Bestehen des Mikro-Belastungstest eine Verringerung des Organismenniveaus um mindestens 2 log ist, wenn das Anfangsniveau der Organismen 1,00 x 102 KBE/mL beträgt, wie durch ein Plattengussverfahren bestimmt.

12. Verfahren nach einem der Ansprüche 9-11, wobei das Ethanol in einer Menge von mindestens 10 Gew.-% vorhanden ist;
wobei das natürliche Öl in einer Menge zwischen etwa 5 Gew.-% und etwa 15 Gew.-% vorhanden ist;
wobei das Verhältnis des natürlichen Emulgators zu dem natürlichen Öl mindestens 4:1 beträgt; oder
wobei das natürliche Trübungssystem einen Mikro-Belastungstest besteht, der eine Lagerung bei einer Temperatur zwischen 21 und 43°C (zwischen 70 und 110 Grad Fahrenheit) für mindestens sechzig Tage umfasst, wobei das Bestehen des Mikro-Belastungstest eine Verringerung des Organismenniveaus um mindestens 2 log ist, wenn das Anfangsniveau der Organismen 1,00 x 102 KBE/mL beträgt, wie durch ein Plattengussverfahren bestimmt.

13. Natürliches Trübungssystem nach Anspruch 1, wobei das natürliche Trübungssystem im Wesentlichen aus einem natürlichen Öl, ausgewählt aus der Gruppe bestehend aus Palmöl, Kokosnußöl, Canolaöl, Sonnenblumenöl, Sojaöl und Mischungen von irgendwelchen von diesen; einem natürlichen Emulgator, ausgewählt aus der Gruppe bestehend aus Gummiarabikum, Pektin, Quillaja, einem Protein und Mischungen von irgendwelchen von diesen; einer natürlichen Säure; Wasser; und einem natürlichen Konservierungsmittel, umfassend Ethanol, Glycerin oder Kombinationen davon, besteht.

## Revendications

1. Système de turbidité naturelle comprenant une huile naturelle ; un émulsifiant naturel ; un acide naturel ; un composant aqueux naturel ; et un conservateur naturel, le conservateur naturel comprenant de l'éthanol, de la glycérine ou leurs combinaisons et étant présent en une quantité de 5 % à 50 % en poids du système de turbidité naturelle, le composant aqueux naturel comprenant de l'eau, un jus de fruit, un jus végétal, ou les mélanges de l'un quelconque de ceux-ci, et le système de turbidité naturelle contenant seulement des composants naturels.

2. Système de turbidité naturelle selon la revendication 1, dans lequel l'huile naturelle est choisie dans le groupe constitué par l'huile de palme, l'huile de noix de coco, l'huile de canola, l'huile de tournesol, l'huile de soja et les mélanges de l'une quelconque d'entre celles-ci ou l'émulsifiant naturel étant choisi dans le groupe constitué par la gomme arabique, la pectine, la quillaia, une protéine, et les mélanges de l'une quelconque d'entre celles-ci, de préférence la protéine comprenant un isolat de protéine de blé.

3. Système de turbidité naturelle selon la revendication 1 ou 2 dans lequel l'acide naturel est choisi dans le groupe constitué par l'acide malique, l'acide ascorbique, l'acide cinnamique, l'acide glutarique, l'acide fumarique, l'acide gluconique, l'acide succinique, l'acide maléique, l'acide citrique, l'acide adipique et les mélanges de l'un quelconque d'entre ceux-ci.

4. Système de turbidité naturelle selon l'une quelconque des revendications précédentes dans lequel l'éthanol est présent en une quantité d'au moins 10 pour cent en poids, de préférence l'éthanol étant présent en une quantité d'au moins 20 pour cent en poids.

5. Système de turbidité naturelle selon l'une quelconque des revendications précédentes ayant au moins un de ce qui suit :
• comprenant en outre de la gomme dammar comme agent de pesée ;
• la glycérine étant présente en une quantité d'au moins 30 pour cent en poids,
• l'huile naturelle étant présente en une quantité comprise entre 5 pour cent en poids et 15 pour cent en poids,
• le rapport de l'émulsifiant naturel à l'huile naturelle étant compris entre 3:1 et 6:1,
• le rapport de l'émulsifiant naturel à l'huile naturelle étant au moins de 4:1.

6. Système de turbidité naturelle selon l'une quelconque des revendications précédentes ayant un de ce qui suit :
• le système de turbidité naturelle passant un micro défi comprenant le stockage à une température comprise entre 21 et 43 °C (entre 70 et 110 degrés Fahrenheit) durant au moins soixante jours, le passage du micro défi étant une réduction d'au moins 2 log dans le niveau d'organismes quand le niveau initial d'organismes est de 1,00 x 102 UFC/mL, comme déterminé par un procédé de versement sur plaque,
• le système comprenant une turbidité au moment de la fabrication d'au moins 15 unités de turbidité néphélométrique (NTU) ;
• le système comprenant une turbidité au moment de la fabrication d"au moins 350 NTU,
• après que le système est stocké à une température comprise entre 21 et 43 °C (entre 70 et 110 degrés Fahrenheit) durant au moins soixante jours, le système de turbidité naturelle
comprenant une turbidité mesurée qui se situe dans les 5 % de la turbidité mesurée au moment de la fabrication.

7. Produit de boisson comprenant :
au moins un composant de boisson choisi dans le groupe constitué par l'eau, l'eau carbonatée, un jus de fruit, un jus végétal, du thé, du café et du lait ; et
un système de turbidité naturelle selon l'une quelconque des revendications précédentes, de préférence le produit de boisson contenant seulement des composants naturels.

8. Produit de boisson selon la revendication 7 ayant un de ce qui suit :
• le système de turbidité naturelle étant présent en une quantité comprise entre 1000 parties par million et 8000 parties par million du produit de boisson,
• le produit de boisson comprenant une turbidité au moment de la fabrication d'au moins 15 unités de turbidité néphélométrique (NTU),
• le produit de boisson comprenant un précipité de pas plus d'un millimètre de long après que le système est stocké à une température comprise entre 21 et 43 °C (entre 70 et 110 degrés Fahrenheit) durant au moins soixante jours.

9. Procédé de fabrication d'un système de turbidité naturelle selon l'une quelconque des revendications précédentes 1 à 6 comprenant : la formation d'un mélange en combinant une huile naturelle ; un émulsifiant naturel ; un acide naturel ; un composant aqueux naturel comprenant de l'eau, un jus de fruit, un jus végétal, ou les mélange de l'un quelconque d'entre ceux-ci ; et un conservateur naturel, le conservateur naturel comprenant de l'éthanol, de la glycérine ou leurs combinaisons et étant présent en une quantité de 5 à 50 % en poids du système de turbidité naturelle ; et l'homogénéisation du mélange pour former une émulsion ayant une taille de particule moyenne de moins de 1 micromètre (1 µm).

10. Procédé selon la revendication 9 dans lequel l'homogénéisation comprend deux passages et une pression de 27,6 x 10⁶ Pascals (4000 livres par pouce carré (psi)), de préférence le mélange étant formé en dissolvant l'acide naturel et l'émulsifiant naturel dans le composant aqueux naturel ; l'addition du conservateur naturel ; l'addition de l'huile naturelle ; la soumission du mélange à un cisaillement pour former une émulsion comprenant des particules ayant une taille de particule moyenne comprise entre 5 micromètres et 20 micromètres.

11. Procédé selon les revendications 9 ou 10 ayant un de ce qui suit :
• l'huile naturelle étant choisie dans le groupe constitué par l'huile de palme, l'huile de noix de coco, l'huile de canola, l'huile de tournesol, l'huile de soja et les mélanges de l'une quelconque de celles-ci,
• l'émulsifiant naturel étant choisi dans le groupe constitué par la gomme arabique, la pectine, la quillaia, une protéine et les mélanges de l'une quelconque de celles-ci,
• l'acide naturel étant choisi dans le groupe constitué par l'acide malique, l'acide ascorbique, l'acide cinnamique, l'acide glutarique, l'acide fumarique, l'acide gluconique, l'acide succinique, l'acide maléique, l'acide citrique, l'acide adipique et les mélanges de l'un quelconque d'entre ceux-ci,
• le composant aqueux naturel comprenant de l'eau, un jus de fruit, un jus végétal, ou les mélanges de l'un quelconque d'entre ceux-ci,
• l'éthanol étant présent en une quantité d'au moins 10 pour cent en poids,
• l'addition de la gomme dammar à l'huile naturelle comme agent de pesée,
• l'huile naturelle étant présente en une quantité comprise entre 5 pour cent en poids et 15 pour cent en poids,
• le rapport de l'émulsifiant naturel à l'huile naturelle étant d'au moins 4:1,
• le système de turbidité naturelle passant un micro défi comprenant le stockage à une température comprise entre 21 et 43 °C (entre 70 et 110 degrés Fahrenheit) durant au moins soixante jours, le passage du micro défi étant une réduction d'au moins 2 log dans le niveau d'organismes quand le niveau d'organismes initial est de 1,00 102 UFC/mL, comme déterminé par un procédé de versement sur plaque.

12. Procédé selon l'une quelconque des revendications 9 à 11 dans lequel l'éthanol est présent en une quantité d'au moins 10 pour cent en poids ;
l'huile naturelle étant présente en une quantité comprise entre 5 pour cent en poids et 15 pour cent en poids ;
le rapport de l'émulsifiant naturel à l'huile naturelle étant au moins de 4:1 ; ou le système de turbidité naturelle passant un micro défi comprenant le stockage à une température comprise entre 21 et 43 °C (entre 70 et 110 degrés Fahrenheit) durant au moins soixante jours, le passage du micro défi étant une réduction d'au moins 2 log dans le niveau d'organismes quand le niveau d'organismes initial est de 1,00 102 UFC/mL, comme déterminé par un procédé de versement sur plaque.

13. Système de turbidité naturelle selon la revendication 1, dans lequel le système de turbidité naturelle est constitué essentiellement d'une huile naturelle choisie dans le groupe constitué par l'huile de palme, l'huile de noix de coco, l'huile de canola, l'huile de tournesol, l'huile de soja et les mélanges de l'une quelconque d'entre celles-ci ; un émulsifiant naturel choisi dans le groupe constitué par la gomme arabique, la pectine, la quillaia, une protéine et les mélanges de l'une quelconque d'entre celles-ci ; un acide naturel ; de l'eau ; et un conservateur naturel comprenant de l'éthanol, de la glycérine ou leurs combinaisons.
